# EUROPEAN PATENT APPLICATION

(11) **EP 1 977 843 A1**
(43) Date of publication of application: **08.10.2008**
(21) Application number: 07251519.0
(22) Date of filing: 05.04.2007
(51) Int. Cl.: B21D 39/08, B21D 41/02, B25B 27/10, B23D 21/14, B25F 1/00, B23B 5/16, B29C 65/00

(54) **Apparatus and method for preparing pipe ends**

(71) Applicant: Glynwed Pipe Systems Limited, Kent, TN13 1SD (GB)
(72) Inventor: Archer, Wayne, Staffordshire WS12 1UQ (GB); Millett, Robert, Staffordshire WS7 8XH (GB); Burrowson-Kurn, John, Walsall WS9 9PP (GB)
(74) Representative: Townsend, Victoria Jayne

(57) **Abstract**

An embodiment of the apparatus of the invention comprises a frame defined by a pair of parallel aligned bars 1a, 1b of equal length secured at one end to a mount 2 and at the other to a clamp 3. The mount includes a screw threaded aperture through which passes a tool. The tool has an extended portion 4 which is provided with a thread which mates with the threaded bore so that the tool can be drawn through the mount 2 when a torque is applied to it. The tool includes a multi-purpose tool head having three distinct components, a centring component 5a, a cutting tool 5b and a swaging tool 5c. At the other end of the tool, on the other side of the mount 2 is an operating handle 9 which can be rotated, whether manually or by machine to drive the tool head 5a, 5b, 5c towards the pipe end.

## Description

This invention relates to the preparation of pipe ends for joining. The invention is particularly suited to preparing pipe ends for joining by a heat fusion method. The method and apparatus serve well to prepare ends of multilayered pipes for joining with couplings having a single material composition.

In use, pipes are often subject to high internal pressures and in some cases corroding elements carried in fluids passing through them. In order to minimise the occurrence of leaks or the bursting of overloaded or corroded pipes, it is necessary to ensure that any joins in the pipe are of a consistent quality around the entire circumference of the pipe. This presents a particular challenge when a pipe is made up of multiple layers of different materials some of which may not readily bond with the material of a coupling using known heat fusion techniques.

The present Invention provides an apparatus and method for preparing pipe ends for joining pipes which seeks to overcome some of the problems encountered and result in a good quality join having consistent performance about Its entire circumference.

In accordance with the present invention there is provided an apparatus for preparing a pipe end for joining, the apparatus comprising; a frame having two opposing ends, a clamp positioned at a first end for securing a pipe end in a fixed position and a mount positioned at the second end for receiving a tool which, when the apparatus is in use, can be operated whilst in the mount to prepare an end surface of a pipe end secured in the clamp.

Conveniently the frame comprises 2 or more parallel bars joining a surface of the clamp to an opposing surface of the mount, the mount having an aperture for receiving the tool and the clamp having an aperture for receiving a pipe end, the two apertures sharing a common axis which axis runs parallel with the two or more parallel bars. This configuration ensures that, in use, a tool is presented concentrically to the end surface of the pipe.

Optionally, the apparatus is provided with multiple tools each adapted for preparing different configurations of pipe end. In a preferred option, there is provided one or more multipurpose tools.

The tool(s) may include an extended threaded handle which engages with and passes through a threaded bore in the mount. The extended handle can be connected with a hand or machine operated rotary drive which can be operated to drive the tool towards the end surface of the pipe when secured in the clamp. Desirably, the rotary drive can operate in a forward and a reverse direction.

A multi-purpose tool for use in the apparatus desirably comprises 3 components; a centring component, a cutting component and a swaging component, the three components arranged sequentially along the length of the tool. The tool may include a stop which is operable to limit the depth to which the tool is able to enter the pipe end. The tool may also include a stop which is operable to limit the distance by which the tool can be drawn through the mount.

The following describes a typical method for preparing the end of a multi-layered pipe utilising an apparatus of the form previously described.

A pipe end is clamped in the clamp which is configured to resist axial and rotational movement of the pipe end with respect to the clamp. The tool is positioned at the mouth of the pipe and then driven into the bore of the pipe. Using an appropriate feed mechanism, for example, but not strictly limited to a hand wheel, a drive screw, or a powered drive.

In the case of a 3 component multi-purpose tool, centring component guides and centres the cutting component within the pipe bore to facilitate a concentric cut maintaining a consistent thickness of material about the circumference of the pipe. In the case of multi-layered pipe, this ensures that the thickness of the innermost layer is maintained consistent with respect to the adjacent layer. The diameter of the cutting component is selected to remove a predetermined thickness of material from the inner surface of the pipe. Cutting is achieved by driving the tool further into the bore of the pipe. As the 3 component tool is advanced further into the bore of the pipe, the swaging component further opens up the cut inner diameter of the pipe to a size selected to be compatible with a coupling to be used to join or terminate the pipe. Once the swaging component has been driven to a desired depth, a stop prevents further progression of the tool into the pipe bore. The drive can then be reversed to withdraw the tool from the bore. Again, a stop may be employed to prevent disengagement of the tool from the mount. Once the tool is retracted to a safe distance, the finished pipe end can be removed from the clamp.

Optionally, the aperture of the clamp may be adapted to receive different diameters of pipe end, for example, the aperture may have a stepped diameter. Also optionally, the apparatus may be provided with a number of interchangeable tools designed to perform different operations, or to work on different pipe diameters or pipe materials.

One embodiment of the apparatus of the invention will now be further described with reference to the accompanying drawings in which:
Figure 1 shows an isometric view of an embodiment of the apparatus of the invention

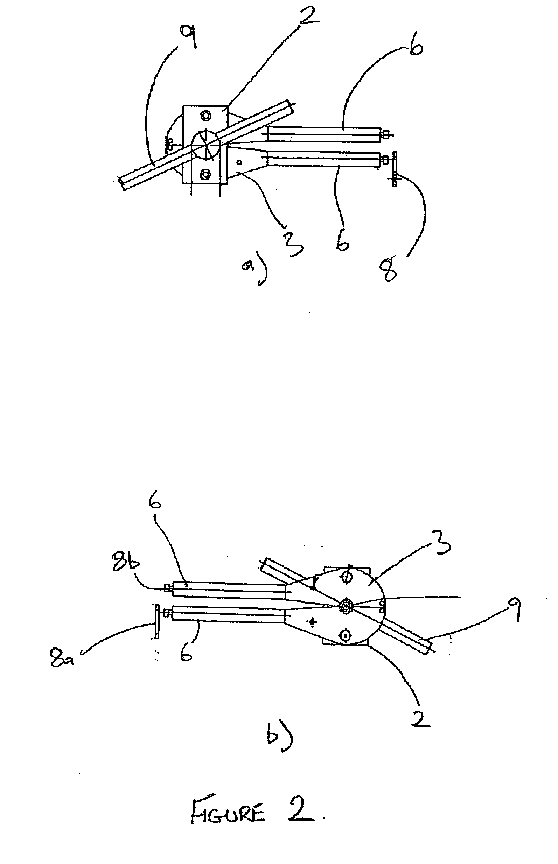

Figure 2 shows first and second end views of the embodiment of Figure 1.

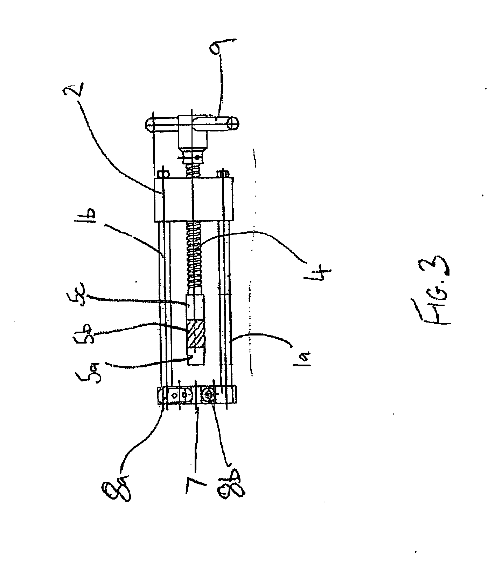

Figure 3 shows a side view of the embodiment of Figures 1 and 2.

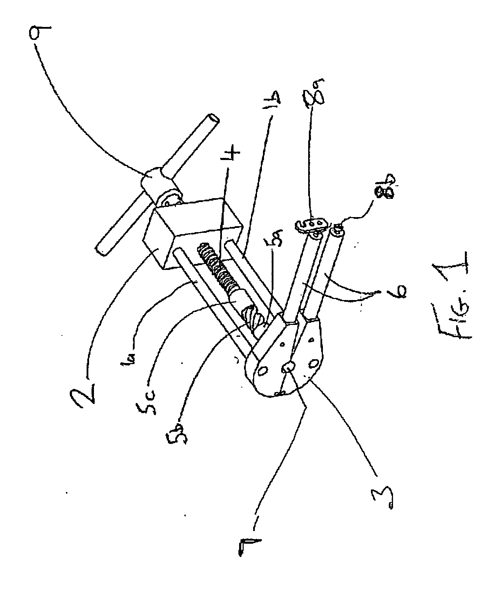

As can be seen from Figure 1, an embodiment of the apparatus of the invention comprises a frame defined by a pair of parallel aligned bars 1a, 1b of equal length secured at one end to a mount 2 and at the other to a clamp 3. The mount includes a screw threaded aperture through which passes a tool. The tool has an extended portion 4 which is provided with a thread which mates with the threaded bore so that the tool can be drawn through the mount 2 when a torque is applied to it. The tool includes a multi-purpose tool head having three distinct components, a centring component 5a, a cutting tool 5b and a swaging tool 5c. At the other end of the tool, on the other side of the mount 2 is an operating handle 9 which can be rotated, whether manually or by machine to drive the tool head 5a, 5b, 5c towards the pipe end.

The clamp 3 comprises hinged jaws 6 which close around an aperture 7 which is sized to receive a pipe end of predetermined diameter. A latch arrangement 8a, 8b is provided at ends of the jaws 6 distal from the aperture 7.

In use, a pipe end (not shown) is inserted into aperture 7 and the jaws 6 closed around its outer circumference. The jaws 6 are secured together by means of latch 8a, 8b to grip the pipe end. Using the handle 9, the tool is driven into the pipe end with the centring component 5a entering first to centre the tool correctly in the pipe bore. As the tool is driven further into the bore, the cutting tool 5b removes material from the inner surface of the pipe. As the tool is driven further, the swaging component 5c enters the bore and rounds off the cut surface to a predetermined thickness. By applying a reverse torque to the handle 9, the tool is withdrawn from the pipe end. The finished pipe can then be removed by releasing the latch 8a, 8b and opening the jaws 6 of the clamp 3.

## Claims

1. An apparatus for preparing a pipe end for joining, the apparatus comprising; a frame (1a, 1b) having two opposing ends, a clamp (3) positioned at a first end for securing a pipe end in a fixed position and a mount (2) positioned at the second end for receiving a tool (4, 5a, 5b, 5c) which, when the apparatus is In use, can be operated whilst in the mount (2) to prepare an end surface of a pipe end secured in the clamp (3).

2. An apparatus as claimed in claim 1 **characterised in that** the frame comprises two or more parallel bars (1a, 1b) joining a surface of the clamp (3) to an opposing surface of the mount (2), the mount (2) having an aperture for receiving the tool (4, 5a, 5b, 5c) and the clamp (3) having an aperture (7) for receiving a pipe end, the two apertures sharing a common axis which axis runs parallel with the two or more parallel bars (1a, 1b).

3. An apparatus as claimed in any preceding claim further **characterised by** multiple tools each adapted for preparing different configurations of pipe end.

4. An apparatus as claimed in any preceding claim further **characterised by** at least one multipurpose tool.

5. An apparatus as claimed in claim 4 **characterised in that** the multi-purpose tool comprises three components; a centring component (5a), a cutting component (5b) and a swaging component (5c), the three components arranged sequentially along the length of the tool.

6. An apparatus as claimed in any preceding claim **characterised in that** the tool(s) includes an extended threaded handle (4) which engages with and passes through a threaded bore in the mount (2).

7. An apparatus as claimed in any preceding claim further **characterised by** a drive mechanism (9) for driving the tool into a pipe end secured in the clamp.

8. An apparatus as claimed in claim 7 **characterised in that** the drive (9) is configured for manual operation.

9. An apparatus as claimed in claim 7 **characterised in that** the drive is configured for machine operation.

10. An apparatus as claimed in any of claims 7 to 9 **characterised in that** the drive can be operated in both a forward and reverse direction.

11. An apparatus as claimed in any preceding claim **characterised in that** the tool(s) includes a stop which is operable to limit the depth to which the tool is able to enter the pipe end.

12. An apparatus as claimed in any preceding claim **characterised in that** the tool(s) include a stop which is operable to limit the distance by which the tool can be drawn through the mount (2).

13. A tool for use in an apparatus as claimed in preceding claim, the tool comprising a centring component (5a), a cutting component (5b) and a swaging component (5c), the three components arranged sequentially along the length of the tool.

14. A tool as claimed In claim 13 further **characterised by** an extending portion (4) provided with an external screw thread.

15. A method for preparing the end of a multi-layered pipe utilising an apparatus in accordance with any of the preceding claims comprising; securing the end of the pipe so as to prevent axial or rotational movement; introducing a centring component (5a) of a tool into the bore of the pipe, followed by a cutting tool (5b) and operating the cutting tool to remove a predetermined amount of material from the inner surface of the pipe; introducing a swaging component (5c) of the tool to round off the cut surface ; and, removing the tool.
